# EUROPEAN PATENT APPLICATION

(11) **EP 0 865 740 A1**
(43) Date of publication of application: **23.09.1998**
(21) Application number: 97301860.9
(22) Date of filing: 19.03.1997
(51) Int. Cl.: A23P 1/08, A23L 1/176, A23L 1/315

(54) **Coated food product and process for the preparation thereof**

(71) Applicant: UNILEVER PLC, London EC4P 4BQ (GB)
(72) Inventor: de Bruijne, Dirk Willem, 3133 AT Vlaardingen (NL); Sarwin, Ridwan, 3133 AT Vlaardingen (NL); Vermeer-Mols, Linda Johanna Maria, 3133 AT Vlaardingen (NL); Mullin, James Thomas, Walton on Thames Surrey, KT12 1NT (GB)
(74) Representative: Mulder, Cornelis Willem Reinier, Dr.

(57) **Abstract**

A process for the manufacture of a particulate-coated food product comprises; (a) enrobing a frozen food core with an adhesion agent, which has a temperature of from 0 to 20°C, a viscosity of from 0.1 to 6 Pas at 20°C, a setting temperature of from 40°C and 90°C and a water binding capacity of from 0.3 to 5 g water per gram dry matter; (b) coating the enrobed food core with a particulate coating; and (c) freezing the food product; wherein the particulate coating is prepared by drying a food material such as dough under reduced pressure using microwave energy.

## Description

### Technical Field of the Invention

The invention relates to a particulate-coated food product suitable for heating for consumption in a microwave oven and a process for the preparation thereof.

### Background to the Invention

It is desirable to be able to provide particulate-coated food products which, after heating for consumption in a microwave oven, have crisp, crunchy coatings.

Traditionally, such particulate-coated food products are heated for consumption by, for example, deep or shallow fat frying, oven baking or grilling. Using such preparation methods, the product provided has the required crisp, crunchy coating. However, when conventional coated products are heated for consumption in a microwave oven the product provided has a particulate coating that is soggy, tough and leathery. This is because the temperature reached at the outer part of the product during microwave heating is not sufficient to generate the crispness required.

Conventional coated food products are manufactured according to the following steps:
- portioning the food product to be coated
- applying batter
- applying a particulate coating, typically breadcrumbs
- frying the coated food product in oil
- freezing
- packaging and storing.

The consumer subsequently heats the products for consumption.

We have observed that, during manufacture, the step of frying the coated product in oil in order to set the batter and adhere the breadcrumbs to the batter results in the relatively dry breadcrumbs (moisture content of approximately 5%) being trapped in the batter which has a high moisture content (approximately 60%), leading to a migration of water from the batter into the dry breadcrumb. On conventional heating for consumption (eg. oven baking, grilling, shallow fat frying), the excess moisture in the breadcrumb will be lost, however this is not possible with microwave heating.

We have now solved the problem of how to provide a microwaveable particulate-coated food product by use of a modified process of manufacture. In this process, particulate materials are prepared by drying under reduced pressure using microwave energy, and they are adhered to a food product via an adhesion agent having specific properties.

US 4664924 discloses a method for producing a dehydrated porous seasoned food product, useful as an ingredient of an instant or snack food. The method comprises placing the seasoned food in a container with a lid and applying microwave radiation under reduced pressure to dehydrate the food.

EP 0469176 relates to a process for producing a rehydratable dehydrated product, in which the starting material is dehydrated in a microwave enclosure under reduced pressure to give a porous structure. The dehydrated material is then coagulated.

WO 94/22330 relates to a crumb which is resistant to high levels of humidity without degradation of quality; it comprises a dispersed phase of non-gelatinised starch within a continuous phase of wheat protein. The crumbs may be formed by subjecting dough to vacuum baking, which may be conducted in a microwave oven.

### Description of the Invention

According to the present invention there is provided a process for the manufacture of a particulate-coated food product, the process comprising the steps of:
(a) enrobing a frozen food core with an adhesion agent, which has a temperature of from 0 to 20°C, a viscosity of from 0.1 to 6 Pas at 20°C, a setting temperature of from 40°C to 90°C and a water binding capacity of from 0.3 to 5g water per gram dry matter;
(b) coating the enrobed food core with a particulate coating; and
(c) freezing the food product; wherein the particulate coating is prepared by drying a food material under reduced pressure using microwave energy.

The food material may be dough, meat, fish, poultry, vegetables, seeds, nuts, fruits and mixtures thereof. The food material may contain additives to improve its performance during processing and in the final product. Preferably, the food material is dough which is made from wheat flour.

If the food material is not in the form of a particulate during the step of drying under reduced pressure using microwave energy, it is divided into particles after this step. For example, dried dough is broken down into crumbs.

The reduced pressure applied is preferably in the range of from 10 to 200 mbar.

When the food material is dough, it preferably has an initial flow stress in the range of from 0.1 to 100 kPa, more preferably from 1 to 20 kPa. Flow stress is the minimum stress required to induce permanent flow of the dough.

The dough and any other food material are preferably exposed to sufficient microwave energy to reduce their moisture content to less than or equal to 25% by weight of the food material, more preferably to less than or equal to 10% by weight of the food material. (Dough commonly has a moisture content of 55 to 60 % by weight on flour.)

A food product prepared in accordance with the present invention and having a particulate coating of crumbs prepared from dough is superior in texture when heated for consumption in a microwave oven than products coated with traditional batter and dough-based crumb coatings. For example, the crumbs of the present invention are crisper.

Moreover, crumbs prepared from dough by drying under reduced pressure using microwave energy have a structure and texture which differ from the structure and texture of conventional vacuum-baked crumbs. This is because the pressure reduction induces a volumetric expansion of the dough which subsequently sets as a consequence of the microwave energy applied. Consequently, the crumbs of the present invention have a cellular structure with thinner walls than those of conventional vacuum-baked crumbs; as a result, the texture of the crumbs is lighter and less hard.

Furthermore, control of the process parameters (ie pressure reduction, intensity of microwave energy Watt/k) enables the structure and texture of the resultant crumbs or any other food material to be controlled.

The adhesion agent may be heat-set in between steps (b) and (c). Examples of suitable heating methods are the application of high intensity near infrared as disclosed in WO 94/10857, the use of targeted dielectric heat as disclosed in EP 0650670, the application of steam as disclosed in GB 1 508 781 and the application of conventional heating methods such as conventional oven baking, infra red radiation and air impingement.

The particulate coating is porous. It is important that the pores of the coating are not substantially blocked; otherwise, drying the coated product in a microwave oven is not sufficient to achieve crispness.

Frying the coated product in fat prior to freezing may cause fat to block the pores; hence, frying is not a suitable heating method for setting the adhesion agent.

The viscosity of the adhesion agent is also important in achieving crumb crispness; its viscosity should not be so low that it penetrates and blocks the pores; instead, its viscosity should be such that it penetrates the pores only a little in order to stick the coating onto the food core.

It should be noted that the adhesive agent is not acting as a moisture barrier, ie. it does not necessarily prevent diffusion of water into the crumb coating on frozen storage.

The food core may comprise, for example, meat, such as poultry, lamb, beef, pork, veal, fish, vegetables and mixtures thereof. Alternatively the food core may comprise the above (the food inner core) coated with batter and/or sauce.

When the food core comprises a batter coating, the batter is set by any suitable means, for example, deep-frying in oil, blast freezing, application of High Intensity Near Infra Red as disclosed in WO94/10857, application of steam as disclosed in GB 1508781 and application of conventional heating methods such as conventional oven baking, infra red radiation and air impingement.

When the food core comprises both batter and sauce, the sauce may be applied before or after the batter.

The food core is frozen, preferably to from -20 to -30°C, before enrobing in the adhesive agent (process step (a)).

Preferably the food core comprises batter and thus the preferred process for the manufacture of the food product comprises;
(i) applying batter to a frozen food inner core to provide a food core;
(ii) setting the batter;
(iii) freezing the food core;
   (a) enrobing the frozen food core with an adhesion agent, which has a temperature of from 0 to 20°C, a viscosity of from 0.1 to 6 Pas at 20°C, a setting temperature of from 40°C to 90°C and a water binding capacity of from 0.3 to 5g water per gram dry matter;
   (b) coating the enrobed food core with a particulate coating;
   (c) freezing the food product
      wherein the particulate coating is prepared by drying a food material under reduced pressure using microwave energy.

### The Adhesion Agent

Preferably, the adhesion agent has a viscosity of from 0.3 Pas to 5 Pas at 20°C.

Viscosity may be measured by rotation in a conventional rheometer at a shear rate of 10s⁻¹ at a temperature of 20°C.

The setting temperature of the adhesion agent is the temperature at which it becomes solid. This may be determined by means of a rheometer equipped with a programmable thermostat using a concentric cylinder geometry.

For example, the setting temperature of a sample having an initial temperature of about 20°C is measured by heating it at a slow rate up to 100°C in order to obtain a trace of storage modulus as a function of temperature. This trace shows a step at the setting temperature. This point is measured by approximating both the low and the high temperature ends of the trace as straight lines and taking the setting temperature as the point of intersection of the bisectrix of the lines and the curve of the trace.

A preferred setting temperature of the adhesion agent is from 65 to 85 °C. A preferred water binding capacity is from 0.5 to 3g water per gram of dry matter.

Water binding capacity is defined as the amount of water bound by the adhesion agent and may be determined using the centrifugal method described by J.R. Quinn and D. Paton in Cereal Chemistry 56, 1, 38-39 (1979). For example, the sample temperature is 20°C, the centrifugal acceleration is 6000 g (ie 60000 m/s²) and the time of centrifugation is 10 min.

The adhesion agent will typically be a composition comprising a hydrocolloid and/or a soluble protein. The adhesion agent may also optionally comprise fat, for example, vegetable oil.

Suitable hydrocolloids include starch, including modified starch, carrageenan, xanthan, maltodextrins, pectins, alginates, guar gum, agar, gum arabic, locust bean gum, carboxymethylcellulose, hydroxypropyl methyl cellulose, methyl cellulose and mixtures thereof.

Suitable soluble proteins include albumins, globulins, gliadins, glutenins, gelatin, muscle proteins and mixtures thereof. Preferably the soluble protein is selected from albumins, globulins and mixtures thereof.

Suitable adhesion agents are, for example, egg yolk, a composition containing:
1% w/w methylcellulose
39% w/w waxy maize starch
10% w/w coconut fat
50% w/w water
or a composition containing:
16.9% w/w egg white powder
3.5% w/w Admul lec 5377 (an emulsifier from Quest International)
25.9% w/w bean oil
0.1% w/w Tween 60 (an emulsifier from Quest International)
0.1% w/w guar gum
0.5% w/w annatto
53% w/w water.

Examples of the products and processes of the invention will now be described to illustrate, but not to limit, the invention.

### EXAMPLES

### Example 1

Frozen minced chicken meat was shaped into a small oval portion (12 g). The portion was enrobed in a conventional batter having the following composition:
21 % w/w Green flour (Green Flour Millers, UK)
10 % w/w Trident flour (Bowmans, UK)
10 % w/w raw potato starch
2 % w/w salt
57 % w/w water

The enrobed portion was quickly frozen at -30°C for 15 min. The portion was then dipped into an adhesion agent composed of:
- 16.9 % w/w egg white powder
- 3.5 % w/w Admul lec 5377 (Quest International)
- 25.9 % w/w Bean oil
- 0.1 % w/w Tween 60 (Quest International)
- 0.1 % w/w Guar gum
- 0.5 % w/w Annatto
- 53 % w/w water
that was prepared in a homogenizer at a pressure of 125 bar.

The dipped portion was covered with crumbs. These crumbs were prepared from a wheat dough of 1000g Canadian Western Red Spring wheat flour and 580 g water expanded in a Microwave-Vacuum oven at 20°C, 30 mbar for 30 min and crumbled. The resulting crumb fraction (having particles in the size of 2-4 mm) was used to coat the dipped portion.

The coated chicken portion was frozen quickly and stored at -14°C for 8 weeks.

After cooking the frozen sample in a conventional microwave oven (650 Watts, Panasonic type 5485 H) for 3.5 min and allowing it to stand for 3 min at room temperature, the Product was assessed by a trained sensory panel. The panel concluded that the product had an excellent quality; the breadcrumbs were crisp.

### Comparative Example A

A coated food product was prepared by a traditional process, as follows.

A frozen Alaska Pollock fish block was cut into small portions (25g). A portion was enrobed in a conventional batter as used in Example 1 and covered with Pandora Japanese crumbs. The coated product was fried for 25 seconds at 190°C, then quickly frozen at -30°C.

The product was stored at -14°C for 8 weeks.

After cooking the frozen sample in a conventional microwave oven (650 watts, panasonic type 5485H) for 3½ minutes and allowing it to stand for 3 minutes at room temperature, the product was assessed by a trained sensory panel. The panel concluded that the product had a soggy breadcrumb coating.

## Claims

**1.** A process for the manufacture of a particulate-coated food product, the process comprising the steps of;
(a) enrobing a frozen food core with an adhesion agent, which has a temperature of from 0 to 20°C, a viscosity of from 0.1 to 6 Pas at 20°C, a setting temperature of from 40°C to 90°C and a water binding capacity of from 0.3 to 5g water per gram dry matter;
(b) coating the enrobed food core with a particulate coating; and
(c) freezing the food product;
wherein the particulate coating is prepared by drying a food material under reduced pressure using microwave energy.

**2.** A process as claimed in claim 1 wherein the food material is selected from the group consisting of meat, fish, poultry, vegetables, dough, seeds, nuts, fruits and mixtures thereof.

**3.** A process as claimed in claim 1 or claim 2 wherein the food material is dried under a reduced pressure of from 10 to 200 mbar.

**4.** A process as claimed in any preceding claim wherein the food material is dough which has a flow stress in the range of from 0.1 to 100 kPa.

**5.** A process as claimed in claim 4 wherein the dough has a flow stress in the range of from 1 to 20 kPa.

**6.** A process as claimed in any preceding claim wherein the moisture content of the food material after drying under reduced pressure using microwave energy is less than or equal to 25% by weight of the food material.

**7.** A process as claimed in claim 6 wherein the moisture content is less than or equal to 10% by weight of the food material.

**8.** A process according to any preceding claim wherein the adhesion agent has a viscosity of from 0.3 to 5 Pas at 20°C.

**9.** A process according to any preceding claim wherein the adhesion agent has a setting temperature of from 65 to 85°C.

**10.** A process according to any preceding claim wherein the adhesion agent has a water binding capacity of from 0.5 to 3 g water per gram of dry matter.

**11.** A process according to any preceding claim wherein the adhesion agent comprises a hydrocolloid and/or a soluble protein.

**12.** A process according to claim 11 wherein the hydrocolloid is selected from the group consisting of starch, including modified starch, carrageenan, xanthan, maltodextrins, pectins, alginates, guar gum, agar, gum arabic, locust bean gum, carboxymethyl cellulose, hydroxypropyl methyl cellulose, methyl cellulose and mixtures thereof.

**13.** A process according to claim 11 wherein the soluble protein is selected from the group consisting of albumins, globulins, gliadins, glutenins, gelatin, muscle proteins and mixtures thereof.

**14.** A process according to any preceding claim comprising the following steps prior to step a;
(i) applying batter to a frozen food inner core;
(ii) setting the batter;
(iii) freezing the food core.

**14.** A food product obtained by the process claimed in any preceding claim.
